# EUROPÄISCHE PATENTSCHRIFT

(11) **EP 3 367 803 B1**
(45) Veröffentlichungstag und Bekanntmachung des Hinweises auf die Patenterteilung: **07.08.2019**
(21) Anmeldenummer: 15794088.3
(22) Anmeldetag: 21.10.2015
(51) Int. Cl.: A22C 17/10, A22C 11/00

(54) **VERFAHREN ZUR HERSTELLUNG VON SCHÄLDARMWÜRSTCHEN SOWIE SCHÄLDARMWÜRSTCHEN-HERSTELLANLAGE**
METHOD FOR PRODUCING SAUSAGES HAVING PEEL-OFF CASINGS AND PRODUCTION SYSTEM FOR SAUSAGES HAVING PEEL-OFF CASINGS
PROCÉDÉ DE PRODUCTION DE SAUCISSES À BOYAU À PELER AINSI QU'ÉQUIPEMENT DE PRODUCTION DE SAUCISSES À BOYAU À PELER

(43) Veröffentlichungstag der Anmeldung: 05.09.2018
(73) Patentinhaber: Schröter Technologie GmbH & Co. KG, 33829 Borgholzhausen (DE)
(72) Erfinder: DEGENHARDT, Joao, 89560-000 Videira SC (BR)
(74) Vertreter: Schober, Mirko
(86) Internationale Anmeldenummer: PCT/EP2015/074407
(87) Internationale Veröffentlichungsnummer: WO 2017/067596

(56) Entgegenhaltungen:
- DE-A- 2 143 858
- DE-A1- 2 135 830
- US-A- 3 081 173

## Beschreibung

### TECHNISCHES GEBIET

Die Erfindung betrifft ein Verfahren zur Herstellung von Schäldarmwürstchen mit den Merkmalen des Patentanspruchs 1. Weiterhin betrifft die Erfindung eine Schäldarmwürstchen-Herstellanlage zur Durchführung des Verfahrens mit den Merkmalen von Patentanspruch 12.

### STAND DER TECHNIK

Neben losem Hackfleisch erfolgt die Abgabe von Fleischprodukten zumeist entweder am Stück oder in Form von Wurstwaren. Um letzteren eine definierte Menge und/oder Form zu verleihen, wird das diesen zugrundeliegende zerkleinerte Fleisch beispielsweise zusammen mit Speck und etwaigen Gewürzen (Fleischemulsion) in ein geeignetes Behältnis gefüllt. Würstchen erlangen dabei ihre typisch längliche Form, indem die Fleischemulsion in einen Naturdarm oder Kunstdarm eingefüllt wird, welcher anschließend in einzelne Abschnitte abgeteilt wird.

Während Naturdarm wie beispielsweise Saitling (Schafsdarm) zum Mitverzehr geeignet ist, bilden Kunstdärme eine zumeist nur temporäre Hülle. Vor Abgabe der Wurstwaren zu entfernende (abzuschälende) Kunstdärme werden als Schäldarm bezeichnet, wobei der Entfernungsprozess selbst unter dem Begriff "Peelen" bekannt ist. Als Schäldarm wird zumeist Zellulosedarm verwendet. Nach dem Peelen weist die Oberfläche der gekochten und mitunter geräucherten Ware eine aus dem Fleischeiweiß gebildete sogenannte Eigenhaut auf.

Durch das Entfernen des Schäldarms besitzt die Eigenhaut des an sich fertigen Produktes (Schäldarmwürstchen) naturgemäß eine helle Färbung, welche aus Gründen der Optik daher nach dem Peelen typischerweise gefärbt wird. Nur ein unbedeutender Teil derartiger Waren wird demgegenüber ungefärbt vermarktet. Zur Färbung wird eine stark alkalische wässrige Lösung verwendet, deren Farbstoff beispielsweise aus den Samen einer in Südamerika einheimischen Gewürz- und Färbepflanze (Urcum, botanische Bezeichnung Bixa orellana L.) gewonnen wird. Diese entstammt der Familie Bixaceae und weist einen Norbixin-Anteil von ca. 0,9% auf.

Es ist bekannt, die zur Herstellung von Schäldarmwürstchen (z.B. Hot Dogs) in Schäldarm eingefüllte Fleischemulsion zunächst in einem kontinuierlichen oder diskontinuierlichen Trocknungsprozess zu trocknen und in einem anschließenden Kochprozess zu kochen. Je nach gewünschtem Endprodukt kann diesen noch ein Räucherprozess nachgeschaltet sein, bevor ein Kühlprozess und eine mögliche Behandlung mit Wasser (duschen) durchlaufen wird. Je nach Kaliber der herzustellenden Schäldarmwürstchen sowie der möglichen Beladung der Rauchwagen und/oder Spieße verlangen die vorgenannten Prozesse einen Zeitraum von zumeist 50 bis 60 Minuten.

Im Anschluss erfolgt die eigentliche Färbung der Ware, welche in einer Lösung von 2 bis 3 % des Farbstoffes in Wasser durchgeführt wird. Hierzu werden nach dem Stand der Technik zwei verschiedene Verfahren verwendet:
Gemäß einer ersten bekannten Färbemethode kann die von dem Schäldarm gepeelte Ware die Farbstofflösung innerhalb von 10 bis 20 Minuten im Durchlaufverfahren durchlaufen. Hierfür wird ein beispielsweise für das Kühlen von Hähnchen in Wasser bekannter Spin-Chiller verwendet, wobei die Farbstofflösung eine Temperatur von 0 bis 10 C aufweist und somit entsprechend kalt ist.

Eine zweite bekannte Färbemethode basiert ebenfalls auf der Verwendung eines Spin-Chillers oder eines Bottichs, wobei die Ware mittels eines Mitnehmer aufweisenden Förderbandes innerhalb von 10 bis 20 Minuten durch die Farbstofflösung hindurch geführt wird. Gegenüber der erstgenannten Färbemethode weist die Farbstofflösung hierbei eine deutlich höhere Temperatur auf, welche von 45 bis 55 C betragen kann.

Unabhängig von der verwendeten Färbemethode muss der so auf die Ware übertragene Farbstoff auf dieser fixiert werden. Üblicherweise wird hierfür eine 1 bis 2%-ige Milchsäurelösung eingesetzt, in welcher die gefärbte Ware für 15 bis 60 Sekunden verbleibt. Anschließend erfolgt eine Nachkühlung mit Luft oder Wasser, bevor die Schäldarmwürstchen entsprechend verpackt werden.

Aufgrund der bei diesen Methoden üblichen hohen Verkeimung der Ware müssen die verpackten Schäldarmwürstchen im Anschluss nachpasteurisiert oder tiefgefroren werden, um die gewünschte Haltbarkeit zu erreichen.

Zudem ist der direkte Kontakt mit der stark alkalischen Farbstofflösung (pH-Wert >11) mit unerwünschten Reaktionen zwischen der Alkalie und der Ware verbunden, welche sich beispielsweise in einer Verseifung von oberflächlichen Fetten äußert. Auch können dabei Reaktionsprodukte entstehen, welche den Geschmack und/oder den Geruch der Ware negativ beeinflussen. Derartige unerwünschte Reaktionen werden durch die mitunter durchgeführte Praxis der Erhöhung des pH-Wertes auf 11 bis 13 noch verstärkt, bei der für eine verbesserte Wirkung des Farbstoffes eine nachträgliche Alkalisierung der Farbstofflösung während des Färbeprozesses durchgeführt wird.

Die hierfür erforderlichen großen Mengen an Farbstofflösung stellen auch für die Umwelt eine hohe Belastung dar, da diese nach jeder Arbeitsschicht einer Abwasserbehandlung zugeleitet werden muss, welche spezielle und aufwendige Behandlungsmethoden beinhaltet. Auf der anderen Seite sind mitunter hohe Verluste an abgebbarer Ware zu verzeichnen, welche sich aufgrund der als Stückware in großen Mengen durchgeführten Färbeprozesse in mechanisch beschädigten Schäldarmwürstchen (Bruch, Kratzer) und Überfärbungen aufgrund eines zu langen Verbleibs in der Farbstofflösung äußern.

### DIE ERFINDUNG

Vor diesem Hintergrund liegt der vorliegenden Erfindung die Aufgabe zugrunde, ein Verfahren zur Herstellung von Schäldarmwürstchen und eine Herstellanlage hierfür zu schaffen, durch die eine Verbesserung der hygienischen Qualität die Erfordernisse einer nachträglichen Haltbarkeitsbehandlung und die sich aus dem Färbeprozess ergebende aufwendige Nachbehandlung der Farbstofflösung sowie die daraus resultierende Umweltbelastung auf ein Minimum reduziert werden.

Gelöst wird diese Aufgabe durch ein Verfahren zur Herstellung von Schäldarmwürstchen mit den Merkmalen des Anspruchs 1.

Bei diesem Verfahren werden in Kunstdarmabschnitte eingefüllte Mengen einer Fleischemulsion nacheinander wenigstens einem Trocknungsprozess, einem Kochprozess sowie einem Kühlprozess zugeführt. Erfindungsgemäß werden die bereits gekochten Mengen an Fleischemulsion dabei durch den jeweiligen Kunstdarmabschnitt hindurch gefärbt, indem in einem während des Kochprozesses erfolgenden Färbeprozess eine Farbstofflösung zumindest zeitweise auf wenigstens einen Oberflächenbereich der jeweiligen Kunstdarmabschnitte versprüht wird.

Von den bekannten Verfahren und Methoden unterscheidet sich das erfindungsgemäße Verfahren insbesondere dadurch, dass der eigentliche Färbeprozess nun nicht mehr am Ende des Herstellungsverfahrens durchgeführt wird, sondern im Zuge des Kochprozesses. Der besondere Vorteil liegt dabei in der Tatsache, dass die erforderliche Menge an Farbstofflösung auf ein Minimum reduzierbar ist, da diese nun nicht mehr in einem zu durchlaufenden Behältnis vorliegt, sondern in nur kleinen Mengen direkt auf die Ware aufgesprüht wird.

Das vorherige Entfernen der Kunstdarmabschnitte ist dabei nicht erforderlich. Im Gegenteil bilden die Kunstdarmabschnitte eine Art Filter, wodurch der Färbeprozess insgesamt weniger aggressiv mit der Oberfläche der zu färbenden Ware in Kontakt tritt. Die eingangs erwähnte, den Geschmack und/oder den Geruch der Ware negativ beeinträchtigende Entstehung etwaiger Reaktionsprodukte bleibt bei dem erfindungsgemäßen Verfahren aus oder wird zumindest auf ein Minimum reduziert. Zu erwähnen ist, dass zudem eine nachträgliche Alkalisierung entfällt, welche ebenfalls zur Entstehung unerwünschter Reaktionsprodukte sowie höherer Belastung der zu entsorgenden Farbstofflösung beiträgt.

Aufgrund der Zusammenlegung von Kochprozess und Färbeprozess ist das erfindungsgemäße Verfahren insgesamt wirtschaftlicher durchführbar. Überdies wird hierdurch die hygienische Qualität der Ware deutlich erhöht, so dass eine nachträgliche Behandlung zur Erhöhung der Haltbarkeit reduziert oder gar vollständig entfallen kann.

Nach einer bevorzugten Variante des erfindungsgemäßen Verfahrens können ein Überschuss an versprühter Farbstofflösung aus dem Färbeprozess sowie aus dem Kochprozess anfallendes Kondensat gemeinsam zunächst einem geeigneten Behälter bzw. Behältnis zugeführt werden. Ziel hierbei ist dessen kontinuierliche Verwendung für den laufenden oder einen nachfolgenden Färbeprozess. Hierfür wird der durch das Kondensat verdünnten Farbstofflösung je nach Bedarf erneut Farbstoff zugesetzt, so dass die benötigte Konzentration der Farbstofflösung vor deren erneuten Verwendung gezielt eingestellt werden kann. Anschließend kann die so eingestellte Farbstofflösung erneut versprüht werden.

Hierdurch kann die Menge an zu verwendender und insbesondere zu entsorgenden Farbstofflösung auf ein Minimum reduziert werden. Dies kann so weit gehen, dass keinerlei Rückstände an Farbstoff zu entsorgen sind.

Bevorzugt kann das erfindungsgemäße Verfahren in diesem Zusammenhang eine weitere Maßnahme beinhalten, welche eine Zuführung des Überschusses an versprühter Farbstofflösung und des anfallenden Kondensats zu einer Stofftrennung vorsieht. Besonders bevorzugt kann besagte Stofftrennung mittels Zentrifugieren erfolgen, um die Teile unterschiedlicher Dichte innerhalb kürzester Zeit voneinander zu trennen. Der für das erneute Versprühen vorgesehene Teil kann dabei mittels einer Inline-Analyse untersucht werden, so dass die jeweils benötigte Menge an zuzusetzendem Farbstoff zum Erreichen der erforderlichen Konzentration gezielt ermittelt werden kann.

Die Erfindung sieht vor, dass im Anschluss an den Kochprozess und den Färbeprozess ein Evakuierungsprozess durchgeführt werden kann. Durch ein schnelles Ablüften der heißen Ware kann diese dadurch sehr schnell getrocknet werden. Der Evakuierungsprozess kann zum Beispiel durchgeführt werden, indem der Anlage - insbesondere von der Unterseite der Anlage her - eine große Menge Umgebungsluft zugeführt wird. Diese umströmt die Ware und wird über einen Abluftventilator wieder abgeführt.

Je nach gewünschtem Endprodukt kann im Rahmen der Erfindung selbstverständlich auch ein Räucherprozess durchgeführt werden. In vorteilhafter Weise ist dieser dann dem Kühlprozess vorgelagert. In besonders bevorzugter Weise kann der Räucherprozess zwischen dem Evakuierungsprozess und dem darauffolgenden Kühlprozess erfolgen. Durch den Räucherprozess können in bekannter Weise die Eigenschaften der Ware beeinflusst werden, wie etwa deren Farbe, Geruch und/oder Geschmack. Auch lässt sich hierdurch deren Haltbarkeit erhöhen.

In Bezug auf den Trocknungsprozess sieht eine bevorzugte Weiterbildung des erfindungsgemäßen Verfahrens vor, dass dieser bei einer Trocknungstemperatur von 60 bis 90 C, besonders bevorzugt bei einer Trocknungstemperatur von 70 bis 80 C durchgeführt werden kann. In diesem Temperaturbereich ist eine wirtschaftliche Trocknung hinsichtlich Energieaufwand und Trocknungsgeschwindigkeit möglich, wobei auch die Ware selbst entsprechend schonend behandelt wird. In diesem Zusammenhang kann die aufzuwendende Trocknungszeit von 5 bis 10 Minuten betragen, innerhalb der besagter Trocknungsprozess durchgeführt wird.

In Bezug auf den Kochprozess ist vorgesehen, dass dieser bevorzugt bei einer Kochtemperatur von 70 bis 95 C, besonders bevorzugt bei einer Kochtemperatur von 80 bis 85 °C durchgeführt werden kann. Auch hier ist in dem angegebenen Temperaturbereich ein wirtschaftliches Kochen der Ware durchführbar. Hinsichtlich der für den Kochprozess aufzuwendenden Kochzeit kann diese nach der Erfindung bevorzugt von 20 bis 30 Minuten, insbesondere 25 Minuten betragen.

Hinsichtlich der erfindungsgemäßen Durchführung des Färbeprozesses während des Kochprozesses hat sich als besonders vorteilhaft herausgestellt, wenn der Färbeprozess während 10 bis 20 Minuten der Kochzeit, insbesondere während 15 Minuten der Kochzeit durchgeführt wird.

Im Hinblick auf den Evakuierungsprozess kann dieser nach einer vorteilhaften Weiterentwicklung der Erfindung mit einer Evakuierungszeit von 2 bis 4 Minuten, insbesondere mit einer Evakuierungszeit von 3 Minuten durchgeführt werden.

Nach einer bevorzugten Weiterbildung des erfindungsgemäßen Verfahrens kann der Räucherprozess bei einer Räuchertemperatur von 50 bis 70 C, besonders bevorzugt bei einer Räuchertemperatur von 60 bis 65 C durchgeführt werden. Die hierbei aufzuwendende Räucherzeit kann in vorteilhafter Weise von 5 bis 10 Minuten betragen. Durch den Räucherprozess in den genannten Bereichen wird zudem eine Farbstabilisierung der gefärbten Ware erreicht.

Mit dem vorgestellten erfindungsgemäßen Verfahren ist es nunmehr möglich, Schäldarmwürstchen mit einer verbesserten hygienischen Qualität herzustellen. Dies liegt im Wesentlichen an der Reduzierung der zur Herstellung notwendigen Einzelprozesse durch Zusammenlegung des Koch- und Färbeprozesses. Auf diese Weise wird der ansonsten mitunter kalte Färbeprozess in den eigentlichen thermischen Prozess (Kochprozess) integriert. Zudem kann das mitunter an einigen Stellen noch manuelle Handling vollständig automatisiert werden, wodurch eine potentielle Verkeimung der Ware nochmals reduzierbar ist.

Aufgrund der erhöhten hygienischen Qualität der Ware ist eine nachträgliche Haltbarkeitsbehandlung, wie beispielsweise durch nachträgliches Pasteurisieren und/oder Frosten nicht mehr notwendig. Über die erfindungsgemäße Rückführung des anfallenden Kondensats sowie der Farbstofflösung in den Färbeprozess ergeben sich weitere wirtschaftliche und umwelttechnische Vorteile. Dies liegt im Wesentlichen daran, dass mit der Erfindung die sich aus dem Färbeprozess ergebende aufwendige Nachbehandlung der Farbstofflösung sowie die daraus resultierende Umweltbelastung auf ein Minimum reduzierbar sind.

Dank des erfindungsgemäßen Verfahrens ist es möglich, den gesamten für die Herstellung aufzuwendenden Energieverbrauch um bis zu 50% zu reduzieren. Dies ist im Wesentlichen auf die Zusammenlegung des Koch- und Färbeprozesses und den mitunter möglichen Wegfall anderer Prozesse zurückzuführen.

Untersuchungen haben gezeigt, dass mit dem erfindungsgemäßen Verfahren der Verbrauch an Farbstoff deutlich reduzierbar ist. Nachfolgende Tabelle verdeutlicht den Verbrauch von Farbstoff mittels eines Vergleichs der konventionellen Färbung und der Färbung im Rahmen der Erfindung:

| | Konventionelle Färbung | Färbung im Rahmen des erfindungsgemäßen Verfahrens |
|---|---|---|
| Würstchen | 0,2-0,6% | 0,2% |
| Hülle (Darm) | - | 0,02% |
| Zur Entsorgung | 0,6-2,0% | - |
| Gesamt | 1-3% | 0,22% |

Nach einer bevorzugten Variante wird bei den Schäldarmwürstchen der Kunstdarm durch Peelen entfernt, bevorzugt als letzer Verfahrensschritt. Bevorzugt werden die Schäldarmwürstchen dann sofort nach dem Peelen unverzüglich verpackt.

Auch ist die Erfindung auf eine Schäldarmwürstchen-Herstellanlage gemäß Anspruch 12 gerichtet. Diese kann in besonders bevorzugter Weise zur Durchführung des zuvor vorgestellten erfindungsgemäßen Verfahrens herangezogen werden.

Die Schäldarmwürstchen-Herstellanlage weist eine Durchlaufrichtung auf, in welcher nacheinander wenigstens folgende Anlagenabschnitte angeordnet sind:
Ein Trocknungsabschnitt, ein Evakuierungsabschnitt sowie ein Räucherabschnitt und ein Kühlabschnitt. Erfindungsgemäß ist dabei zwischen dem Trocknungsabschnitt und dem Evakuierungsabschnitt ein kombinierter Koch- und Färbeabschnitt angeordnet.

Die sich aus dieser Anordnung der einzelnen Anlagenabschnitte ergebenden Vorteile wurden bereits im Zusammenhang mit dem zuvor erläuterten erfindungsgemäßen Verfahren zur Herstellung von Schäldarmwürstchen näher erläutert. Zur Vermeidung von Wiederholungen wird daher an dieser Stelle auf die vorherigen Ausführungen hierzu verwiesen.

Weitere Ausgestaltungen der Schäldarmwürstchen-Herstellanlage können sich durch eine technisch sinnvolle Kombination einzelner oder mehrerer in der vorherigen Beschreibung aufgezeigter Merkmale sowie Maßnahmen ergeben und werden ausdrücklich im Rahmen der Erfindung mit beansprucht. Weitere Charakterisierungen und Spezifizierungen der Erfindung können sich insbesondere im Zusammenhang mit der nachfolgend beschriebenen Figur ergeben, welche ebenfalls als Teil der Erfindung angesehen und beansprucht wird.

### KURZBESCHREIBUNG DER ZEICHNUNG

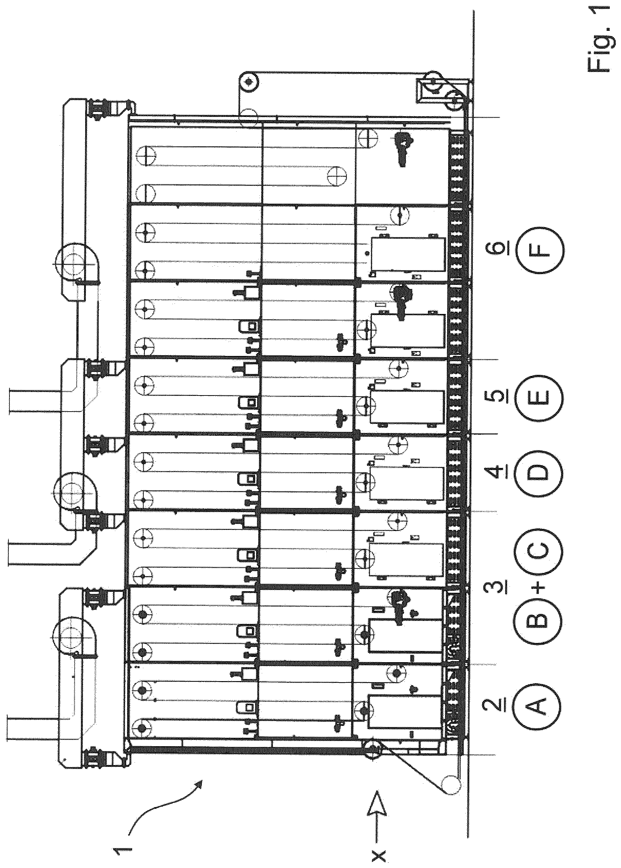

Die in den einzelnen Anlagenabschnitten erfolgenden Prozesse werden nunmehr nochmals verdeutlicht. Hierzu wird die vorliegende Erfindung nachfolgend anhand eines in der Zeichnung schematisch dargestellten Ausführungsbeispiels näher erläutert. Darin zeigt Fig. 1 eine Seitenansicht einer erfindungsgemäßen Schäldarmwürstchen-Herstellanlage.

### BESTER WEG ZUR AUSFÜHRUNG DER ERFINDUNG

Mit Bezug auf Fig. 1 und die darin ersichtliche Schäldarmwürstchen-Herstellanlage 1 weist diese eine Durchlaufrichtung x auf, welche sich vorliegend von links nach rechts erstreckt.

Die Schäldarmwürstchen-Herstellanlage 1 umfasst mehrere in Durchlaufrichtung x hintereinander angeordnete und somit aufeinanderfolgende Anlagenabschnitte. Die jeweils einzelne Zonen bildenden Anlagenabschnitte umfassen zunächst einen am Beginn der Durchlaufrichtung x eingangsseitig angeordneten Trocknungsabschnitt 2, welchem ein erfindungsgemäßer kombinierter Koch- und Färbeabschnitt 3 nachgelagert ist. Daran anschließend in Durchlaufrichtung x angeordnet befinden sich ein Evakuierungsabschnitt 4 sowie darauf folgend ein Räucherabschnitt 5. Den in Durchlaufrichtung x zuletzt gelegenen Anlagenabschnitt repräsentiert ein Kühlabschnitt 6.

Für die Herstellung von Schäldarmwürstchen werden in nicht näher gezeigte Kunstdarmabschnitte eingefüllte Mengen einer Fleischemulsion (hier allgemein als "Ware" bezeichnet) nacheinander in Durchlaufrichtung x durch die Schäldarmwürstchen-Herstellanlage 1 hindurch geführt.

Zu Beginn wird der Trocknungsabschnitt 2 durchlaufen, in welchem die Ware einem Trocknungsprozess A zugeführt wird. Der Trocknungsprozess A erfolgt bei einer Trocknungstemperatur von 70 bis 80 C, wobei die Trocknungszeit von 5 bis 10 Minuten beträgt. Anschließend gelangt die so getrocknete Ware in den kombinierten Koch- und Färbeabschnitt 3. Hierin wird sie einem Kochprozess B zugeführt, welcher bei einer Kochtemperatur von 80 bis 85 C und mit einer Kochzeit von vorliegend 25 Minuten erfolgt. Innerhalb des kombinierten Koch- und Färbeabschnittes 3 erfolgt parallel zum Kochprozess B ein demgegenüber zeitlich kürzerer Färbeprozess C mit einer Dauer von 15 Minuten. Während des Färbeprozesses C wird eine nicht näher gezeigte Farbstofflösung zumindest zeitweise auf wenigstens einen Oberflächenbereich der jeweiligen Kunstdarmabschnitte versprüht. Auf diese Weise werden die bereits gekochten Mengen an Fleischemulsion durch den jeweiligen Kunstdarmabschnitt hindurch in gewünschter Weise gefärbt.

Ein dabei zwangsläufig anfallender Überschuss an versprühter Farbstofflösung aus dem Färbeprozess C wird dabei zusammen mit aus dem Kochprozess B naturgemäß anfallendem Kondensat gemeinsam einem Behälter zugeführt. Weiterhin werden der Überschuss an versprühter Farbstofflösung sowie das anfallende Kondensat einer Stofftrennung zugeführt (Zentrifuge). Im Sinne eines Kreislaufs wird der durch das Kondensat verdünnten Farbstofflösung anschließend eine jeweils benötigte Menge an Farbstoff zugesetzt, um erneut die erforderliche Konzentration einzustellen. Die Menge an zuzusetzendem Farbstoff wird dabei durch eine Inline-Analyse ermittelt. Im Anschluss kann sie so ausreichend konzentrierte Farbstofflösung innerhalb des Färbeprozesses C wieder versprüht werden.

Aus dem kombinierten Koch- und Färbeabschnitt 3 heraus gelangt die so gefärbte Ware im Anschluss in den Evakuierungsabschnitt 4, in dem die Ware einem Evakuierungsprozess D mit einer Dauer von 3 Minuten zugeführt wird.

Daraufhin wird die Ware in den Räucherabschnitt 5 überführt, in dem ein Räucherprozess E erfolgt. Der Räucherprozess E der Ware wird bei einer Räuchertemperatur von 60 bis 65°C mit einer Räucherzeit von 5 bis 10 Minuten durchgeführt. Der Räucherprozess E dient insbesondere der Farbstabilisierung der gefärbten Ware.

Zuletzt erreicht die so behandelte Ware den in Durchlaufrichtung x zuletzt angeordneten Kühlabschnitt 6, welcher dem Durchführen eines Kühlprozesses F dient, bevor die fertigen Schäldarmwürstchen die Schäldarmwürstchen-Herstellanlage 1 verlassen. Der Kühlprozess F kann beispielsweise mit Sole erfolgen, wobei dieser so lange erfolgt, bis die Kerntemperatur der Schäldarmwürstchen unter 5°C gefallen ist.

Das mit der erfindungsgemäßen Schäldarmwürstchen-Herstellanlage 1 durchführbare Verfahren zur Herstellung von Schäldarmwürstchen kann in besonders vorteilhafter Weise kontinuierlich und damit im Durchlaufbetrieb erfolgen. Aufgrund der erfindungsgemäßen Zusammenlegung des Koch- und Färbeprozesses B, C innerhalb des kombinierten Koch- und Färbeabschnitts 3 ist es im Vergleich zu konventionellen Herstellverfahren möglich, auf gleicher Fläche nahezu die doppelte Menge an Schäldarmwürstchen in der Hälfte der sonst üblichen Zeit herzustellen. Dabei kann das manuelle Handling vollständig durch eine Automation ersetzt werden. Im Ergebnis können so die Investitions- und Verbrauchskosten um nahezu die Hälfte reduziert werden.

## Patentansprüche

1. Verfahren zur Herstellung von Schäldarmwürstchen, bei welchem in Kunstdarmabschnitte eingefüllte Mengen einer Fleischemulsion nacheinander wenigstens folgenden Prozessen zugeführt werden:
- einem Trocknungsprozess (A),
- einem Kochprozess (B) sowie
- einem Kühlprozess (F),
wobei die gekochten Mengen an Fleischemulsion durch den jeweiligen Kunstdarmabschnitt hindurch gefärbt werden, indem in einem während des Kochprozesses (B) erfolgenden Färbeprozess (C) eine Farbstofflösung zumindest zeitweise auf wenigstens einen Oberflächenbereich der jeweiligen Kunstdarmabschnitte versprüht wird.

2. Verfahren nach Anspruch 1,
**dadurch gekennzeichnet,**
**dass** ein Überschuss an versprühter Farbstofflösung aus dem Färbeprozess (C) sowie aus dem Kochprozess (B) anfallendes Kondensat gemeinsam einem Behälter zugeführt werden, wobei der durch das Kondensat verdünnten Farbstofflösung bedarfsweise Farbstoff zugesetzt wird, wodurch die benötigte Konzentration der Farbstofflösung vor deren erneutem Versprühen eingestellt wird.

3. Verfahren nach Anspruch 2,
**dadurch gekennzeichnet,**
**dass** der Überschuss an versprühter Farbstofflösung und das anfallende Kondensat einer Stofftrennung zugeführt werden, wobei die benötigte Menge an zuzusetzendem Farbstoff durch eine Inline-Analyse ermittelt wird.

4. Verfahren nach einem der vorhergehenden Ansprüche,
**dadurch gekennzeichnet, ,**
**dass** im Anschluss an den Kochprozess (B) und den Färbeprozess (C) ein Evakuierungsprozess (D) durchgeführt wird.

5. Verfahren nach einem der vorhergehenden Ansprüche,
**dadurch gekennzeichnet,**
**dass** vor dem Kühlprozess (F) ein Räucherprozess (E) durchgeführt wird.

6. Verfahren nach einem der vorhergehenden Ansprüche,
**dadurch gekennzeichnet,**
**dass** der Trocknungsprozess (A) bei einer Trocknungstemperatur von 70 bis 80°C mit einer Trocknungszeit von 5 bis 10 Minuten durchgeführt wird.

7. Verfahren nach einem der vorhergehenden Ansprüche,
**dadurch gekennzeichnet,**
**dass** der Kochprozess (B) bei einer Kochtemperatur von 80 bis 85°C mit einer Kochzeit von 20 bis 30 Minuten, insbesondere von 25 Minuten durchgeführt wird, wobei der Färbeprozess (C) während der Kochzeit für 10 bis 20 Minuten, insbesondere für 15 Minuten durchgeführt wird.

8. Verfahren nach einem der Ansprüche 4 bis 7,
**dadurch gekennzeichnet,**
**dass** der Evakuierungsprozess (D) mit einer Evakuierungszeit von 2 bis 4 Minuten, insbesondere von 3 Minuten durchgeführt wird.

9. Verfahren nach einem der Ansprüche 5 bis 8,
**dadurch gekennzeichnet,**
**dass** der Räucherprozess (E) bei einer Räuchertemperatur von 60 bis 65°C mit einer Räucherzeit von 5 bis 10 Minuten durchgeführt wird.

10. Verfahren nach einem der vorigen Ansprüche,
**dadurch gekennzeichnet,**
**dass** der Kunstdarm der Schäldarmwürstchen durch Peelen entfernt wird.

11. Verfahren nach Anspruch 10,
**dadurch gekennzeichnet,**
**dass** die Schäldarmwürstchen nach dem Peelen sofort verpackt werden.

12. Schäldarmwürstchen-Herstellanlage (1) zur Durchführung des Verfahrens nach einem der vorhergehenden Ansprüche, umfassend folgende in eine Durchlaufrichtung (x) aufeinanderfolgende Anlagenabschnitte:
- einen Trocknungsabschnitt (2);
- einen Evakuierungsabschnitt (4);
- einen Räucherabschnitt (5) sowie
- einen Kühlabschnitt (6),
wobei zwischen dem Trocknungsabschnitt (2) und dem Evakuierungsabschnitt (4) ein kombinierter Koch- und Färbeabschnitt (3) angeordnet ist.

## Claims

1. Method for producing sausages having peel-off casings, in which quantities of a meat emulsion filled in the artificial casing sections are supplied in succession to at least the following processes:
- a drying process (A),
- a cooking process (B) as well as
- a cooling process (F)
wherein the cooked quantities of meat emulsion are dyed through the respective artificial skin by spraying a dye solution in a dyeing process (C), taking place during the cooking process (B), at least periodically onto at least one surface area of the respective artificial sausage skin section.

2. Method according to claim 1,
**characterised in that** an
excess of sprayed dye solution from the dyeing process (C) as well as condensate arising from the cooking process (B) are supplied together to a container
wherein when necessary dye is added to the dye solution which is diluted by the condensate, whereby the required concentration of dye solution is adjusted prior to renewed spraying.

3. Method according to claim 2
**characterised in that**
the excess of sprayed dye solution and the arising condensate are supplied to a material separation
wherein the required amount of dye to be added is determined through an inline analysis.

4. Method according to one of the preceding claims
**characterised in that**
following the cooking process (B) and the dyeing process (C) an evacuation process (D) is carried out.

5. Method according to one of the preceding claims
**characterised in that**
a smoking process (E) is carried out prior to the cooling process (F).

6. Method according to one of the preceding claims
**characterised in that**
the drying process (A) is carried out at a drying temperature of 70 to 80° C with a drying time of 5 to 10 minutes.

7. Method according to one of the preceding claims
**characterised in that**
the cooking process (B) is carried out at a cooking temperature of 80 to 85° C with a cooking time of 20 to 30 minutes, in particular 25 minutes, wherein the dyeing process (C) is carried out during the cooking time for 10 to 20 minutes, in particular for 15 minutes.

8. Method according to one of claims 4 to 7
**characterised in that**
the evacuation process (D) is carried out with an evacuation time of 2 to 4 minutes, in particular 3 minutes.

9. Method according to one of claims 5 to 8
**characterised in that**
the smoking process (B) is carried out at a smoking temperature of 60 to 65°C with a smoking time of 5 to 10 minutes.

10. Method according to one of the preceding claims,
**characterised in that**
the artificial casing of the sausage is removed by peeling.

11. Method according to claim 10
**characterised in that**
the skinned sausages are packed immediately after peeling.

12. Production system (1) for sausages having peel-off casings for carrying out the method according to one of the preceding claims, comprising the following system sections successively in a throughput direction (X):
- a drying section (2);
- an evacuation section (4);
- a smoking section (5) as well as
- a cooling section (6)
wherein a combined cooking and dying section (3) is arranged between the drying section (2) and the evacuation section (4).

## Revendications

1. Procédé de fabrication de saucisses en boyau pelable, dans lequel des portions d'une émulsion de viande remplissant des sections de boyau pelable sont soumises au moins aux processus suivants:
- un processus de séchage (A),
- un processus de cuisson (B), et
- un processus de refroidissement (F),
sachant que les portions d'émulsion de viande cuites sont colorées à travers la section de boyau pelable respective, une solution de colorant étant projetée, au moins de temps en temps, sur au moins une partie de la surface des sections de boyau pelable respectives, au cours d'un processus de coloration (C), qui est effectué pendant le processus de cuisson (B).

2. Procédé selon la revendication 1,
**caractérisé en ce que**
l'excédent de la solution de colorant projetée, qui provient du processus de coloration (C), ainsi que de condensat, qui résulté du processus de cuisson (B), sont conduits dans un récipient commun, sachant que, si besoin est, du colorant est ajouté à la solution de colorant diluée par le condensat, ce par quoi la concentration nécessaire de la solution de colorant est réglée avant qu'elle soit de nouveau projetée.

3. Procédé selon la revendication 2,
**caractérisé en ce que**
l'excédent de solution de colorant projetée et le condensat formé sont soumis à une séparation de matières, sachant que la quantité de colorant ajoutée est déterminée par une analyse en ligne.

4. Procédé selon l'une des revendications précédentes,
**caractérisé en ce que**,
faisant suite au processus de cuisson (B) et au processus de coloration (C), un processus d'évacuation (D) est effectué.

5. Procédé selon l'une des revendications précédentes,
**caractérisé en ce que**,
avant le processus de refroidissement (F), un processus de fumage (E) est effectué.

6. Procédé selon l'une des revendications précédentes,
**caractérisé en ce que**
le processus de séchage (A) est effectué à une température de séchage de 70 à 80°C, pendant un temps de séchage de 5 à 10 minutes.

7. Procédé selon l'une des revendications précédentes,
**caractérisé en ce que**
le processus de cuisson (B) est effectué à une température de cuisson de 80 à 85°C, pendant un temps de cuisson de 20 à 30 minutes, en particulier de 25 minutes, sachant que le processus de coloration (C) est effectué 10 à 20 minutes, en particulier 15 minutes, pendant le temps de cuisson.au cours de la cuisson.

8. Procédé selon l'une des revendications 4 à 7,
**caractérisé en ce que**
le processus d'évacuation (D) est effectué avec un temps d'évacuation de 2 à 4 minutes, en particulier de 3 minutes.

9. Procédé selon l'une des revendications 5 à 8,
**caractérisé en ce que**
le processus de fumage (E) est effectué à une température de fumage de 60 à 65°C, pendant un temps de fumage de 5 à 10 minutes.

10. Procédé selon l'une des revendications précédentes,
**caractérisé en ce que**
le boyau artificiel des saucisses en boyau pelable est enlevé par exfoliation.

11. Procédé selon la revendication 10,
**caractérisé en ce que**
les saucisses en boyau pelable sont empaquetées immédiatement après l'exfoliation.

12. Dispositif de fabrication de saucisses en boyau pelable (1) pour l'exécution du procédé selon l'une des revendications précédentes, comprenant les sections de dispositif suivantes, qui se succèdent dans une direction de passage (x):
- une section de séchage (2),
- une section d'évacuation (4),
- une section de fumage (5), ainsi qu'
- une section de refroidissement (6),
sachant qu'une section combinée de cuisson et de coloration (3) est disposée entre la section de séchage (2) et la section d'évacuation (4).
